# EUROPÄISCHE PATENTSCHRIFT

(11) **EP 1 831 617 B1**
(45) Veröffentlichungstag und Bekanntmachung des Hinweises auf die Patenterteilung: **14.10.2009**
(21) Anmeldenummer: 06829310.9
(22) Anmeldetag: 05.12.2006
(51) Int. Cl.: F25B 17/08

(54) **ADSORPTIONSMASCHINE MIT WÄRMERÜCKGEWINNUNG**
ADSORPTION APPARATUS COMPRISING A HEAT RECOVERY SYSTEM
MACHINE D'ADSORPTION A RECUPERATION DE CHALEUR

(30) Priorität: 07.12.2005 DE 102005058630; 11.03.2006 DE 102006011409
(43) Veröffentlichungstag der Anmeldung: 12.09.2007
(73) Patentinhaber: SorTech AG, 06120 Halle (DE)
(72) Erfinder: PAULUSSEN, Sören, 06114 Halle (DE)
(74) Vertreter: Dr. Weitzel & Partner
(86) Internationale Anmeldenummer: PCT/EP2006/011666
(87) Internationale Veröffentlichungsnummer: WO 2007/065632

(56) Entgegenhaltungen:
- DE-A1- 3 700 707
- DE-A1- 19 834 696
- LAVRENCHENKO G K ET AL: "CHARACTERISTICS OF REFRIGERATOR WITH ADSORPTION PUMPING OF LIQUID WORKING AGENT AT TEMPERATURES LOWER THAN 65 K" CRYOGENICS, ELSEVIER, KIDLINGTON, GB, Bd. 34, Nr. 3, 1. März 1994 (1994-03-01), Seiten 227-235, XP000426898 ISSN: 0011-2275

## Beschreibung

Gegenstand der vorliegenden Erfindung ist eine Adsorptionsmaschine insbesondere eine Adsorptionskältemaschine zur Erzeugung von Kälte.

Thermisch angetriebene Adsorptionsmaschinen auf der Basis von Feststoffadsorption für Heizungs- und Kühlungszwecke sind seit geraumer Zeit bekannt. Dabei werden übliche Arbeitsstoffpaare - Sorptionsmaterial und Adsorbat wie beispielsweise Zeolith und Wasser verwendet. Adsorptionsmaschinen mit einem solchen Arbeitsstoffpaar sind beispielsweise mit der DE 198 34 696, DE 199 61 629, DE 100 38 636, DE 101 59 652 oder DE 102 17 443 beschrieben.

An Adsorptionsmaschinen werden verschiedene technische Anforderungen gestellt. Besonders wesentlich sind die Forderungen nach einem hohen Wärmeverhältnis, einer hohen Leistungsdichte und einer einfachen Regelbarkeit der Wärmeabgabe. Das Wärmeverhältnis der Nutzwärme zur Antriebswärme - hier und im Folgenden Coefficent of Perfomance (COP) genannt - hängt im wesentlichen von den Anteilen des sorptiven und des sensiblen Wärmeumsatzes während eines Arbeitszyklus ab. Unter sorptivem Umsatz versteht man dabei die Freisetzung der bei der Adsorption des Arbeitsgases entstehende beziehungsweise die Aufnahme der zur Desorption benötigte Sorptionswärme, wohingegen der sensible Wärmeumsatz den Energieumsatz beschreibt, der bei der Aufheizung beziehungsweise Abkühlung des gesamten Systems auftritt.

Um besonders hohe Wärmeverhältnisse zu erreichen, wurden immer ausgereiftere Systeme entwickelt, wobei insbesondere durch die Anordnung einer Vielzahl von Adsorbereinheiten, welche nacheinander vom Wärmeträger durchströmt und in einer Vielzahl von Zyklen geschaltet werden, eine möglichst hohe Wärmerückgewinnung angestrebt wird. Unter Wärmerückgewinnung versteht man dabei jegliche Rückgewinnung von Wärme - sorptiv sowie sensibel - aus der Adsorptionsphase, wobei die rückgewonnene Wärme für die Desorptionsphase verwendet werden kann, um somit den Energieaufwand von externen Wärmequellen für die Desorption zu reduzieren.

Adsorptionsmaschinen mit zwei Adsorbereinheiten werden üblicherweise zur Kälteerzeugung eingesetzt. In diesen Kältemaschinen arbeiten die Adsorbereinheiten abwechselnd als Adsorber oder Desorber. Die üblichen Steuerungen arbeiten dabei zwischen den Adsorptionsphasen mit Wärmerückgewinnungsphasen, die die Wärmeenergie der noch heißen Adsorbereinheit teilweise in die noch kalte Adsorbereinheit leiten. Durch diese Wärmerückgewinnungsphasen wird die in der Anlage vorhandene Energie zu einem gewissen Teil wieder genutzt, so dass von außen weniger Energie zugeführt werden muss. Die Effizienz dieser Wärmerückgewinnung ist also entscheidend für die Effizienz der gesamten Adsorptionsmaschine.

Übliche Steuerungskonzepte führen den Wärmeträger während der Wärmerückgewinnungsphase parallel oder seriell durch beide Adsorber. Dafür sind zusätzliche Komponenten beispielsweise Umschaltventile oder Pumpen im Wärmeträgerkreissystem erforderlich. Außerdem wird dieser Wärmerückgewinnungskreis von den sonstigen Kreisen abgekoppelt betrieben. Dies führt dazu, dass die meisten extern an die Adsorptionsmaschine angeschlossenen Pumpen für die Zeit der Wärmerückgewinnung keinen Volumenstrom durch die Anlage schicken können und entweder abgeschaltet oder in einem Bypass an der Anlage vorbei geführt werden müssen. Nachteilig an diesen Systemen sind der erhebliche technische Aufwand, die Störanfälligkeit und die hohen Herstellungs- und Wartungskosten.

Der Erfindung liegt die Aufgabe zugrunde, eine Adsorptionsmaschine und ein Verfahren zur Wärmerückgewinnung in einer Adsorptionsmaschine anzugeben, welche im Hinblick auf die genannten Nachteile verbessert sind. Insbesondere soll die Anzahl der Bauteile gegenüber den bekannten Adsorptionsmaschinen vermindert werden, ohne die Wärmerückgewinnung zu verschlechtern, sondern gegebenenfalls zu verbessern. Insbesondere soll die Wärmerückgewinnung ohne Unterbrechung extern angelegter Volumenströme durchgeführt werden können.

Die erfindungsgemäße Aufgabe wird durch eine Adsorptionsmaschine mit den Merkmalen von Anspruch 1 und ein Verfahren mit den Merkmalen von Anspruch 11 gelöst. Die abhängigen Ansprüche beschreiben vorteilhafte und besonders zweckmäßige Ausgestaltungen der Erfindung.

Die erfindungsgemäße Adsorptionsmaschine umfasst in anderen Worten mindestens eine erste und eine zweite Adsorbereinheit, einen Wärmeträger und mindestens zwei Wärmeträgerkreise mit einer Temperaturdifferenz ΔTₓ, von denen ein Wärmeträgerkreis ein Heizkreislauf ist und der andere Wärmeträgerkreis ein Kühlkreislauf ist. Jede Adsorbereinheit arbeitet in einer ersten Desorptionsphase als Desorber und in einer zweiten Adsorptionsphase als Adsorber, wobei der Wärmeträger in einem Rücklauf von einem Desorber eine niedrigere Temperatur aufweist als in einem Vorlauf zu dem Desorber, und der Wärmeträger in einem Rücklauf von einem Adsorber eine höhere Temperatur aufweist als in einem Vorlauf zu dem Adsorber.

Somit wird der Wärmeträger aus einem Vorlauf in einer als Desorber arbeitenden Adsorbereinheit gekühlt, weil Wärme aus dem Wärmeträger auf die Adsorbereinheit überführt wird, und der Wärmeträger aus einem Vorlauf wird in einer als Adsorber arbeitenden Adsorbereinheit erwärmt, weil Wärme aus dem Wärmeträger auf die Adsorbereinheit übertragen wird.

Der Heizkreislauf dient grundsätzlich dazu, aus einer Wärmequelle, die in den Heizkreislauf geschaltet ist, Wärme auf den Wärmeträger zu übertragen, damit dieser den Desorber aufheizen kann. Der Kühlkreislauf dient grundsätzlich dazu mittels einer Wärmesenke, die in den Kühlkreislauf geschaltet ist, Wärme aus dem Wärmeträger abzuführen, damit dieser den Adsorber kühlen kann.

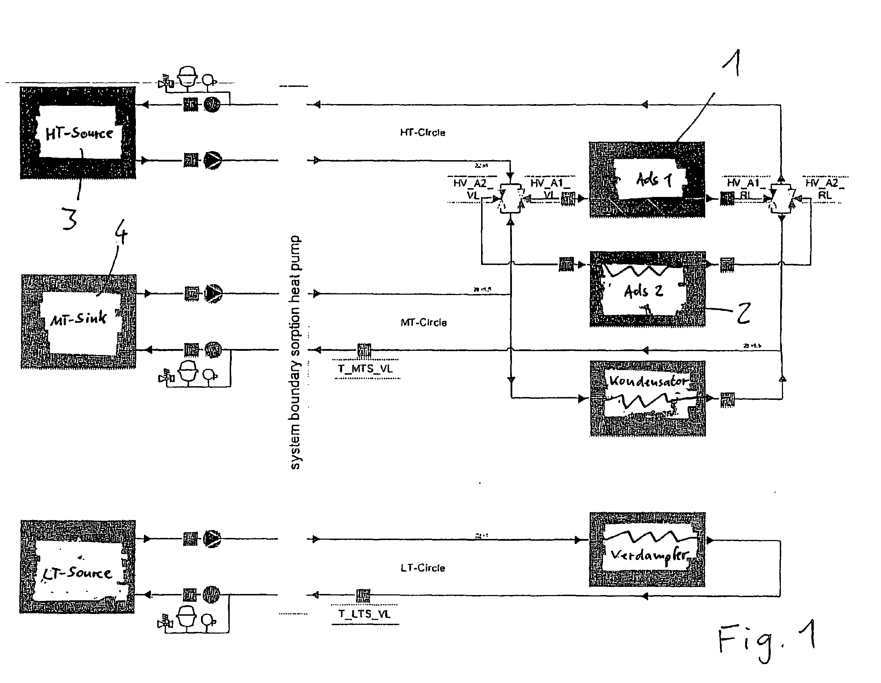

Der Heizkreislauf kann auch als Hochtemperaturkreislauf (HT-Circle) und der Kühlkreislauf als Mitteltemperaturkreislauf (MT-Circle) bezeichnet werden. Entsprechend ist unter HT-Source die Wärmequelle des Heizkreislaufes und unter MT-Sink die Wärmesenke des Kühlkreislaufs zu verstehen, siehe die Figur 1.

Die Temperaturdifferenz zwischen dem Hochtemperaturkreislauf und dem wird vorliegend als ΔTₓ bezeichnet, wobei die Temperatur T_{H} der Obergrenze der Temperaturdifferenz ΔTₓ der beiden Wärmeträgerkreise entspricht. Die Temperatur T_{H} ist jene Temperatur, auf welche der Wärmeträger im Hochtemperaturkreislauf eingestellt werden soll.

Die Temperatur T_{M} entspricht der Untergrenze der Temperaturdifferenz ΔTₓ der beiden Wärmeträgerkreisläufe und jener Temperatur, auf welche der Wärmeträger im Mitteltemperaturkreislauf eingestellt werden soll.

Durch die erfindungsgemäße Ausgestaltung kann eine Adsorptionsmaschine geschaffen werden, deren Wärmerückgewinnung mindestens so groß wie bei herkömmlichen Adsorptionsmaschinen ist, und welche dabei ohne die Integration zusätzlicher Bauteile in die Maschine auskommt.

Insbesondere kann die Wärmerückgewinnung der erfindungsgemäßen Adsorptionsmaschine als ein in den Gesamtprozess integrierter Teilprozess erfolgen, wobei keine Volumenstromunterbrechung erfolgt. Die Wärmerückgewinnung kann allein mit den im System vorhandenen Ventilen und insbesondere Pumpen erfolgen, die ohnehin für die Sorptionsphasen benötigt werden.

ist in einer Adsorptionsmaschine gemäß der vorliegenden Erfindung vorgesehen, dass die Temperaturdifferenz ΔTₓ mindestens 10 °C insbesondere mindestens 20 °C und ganz besonders bevorzugt mindestens 25 °C beträgt. Dabei kann insbesondere vorgesehen sein, dass der Wärmeträger in dem Hochtemperaturkeis eine Temperatur T_{H} von mindestens 70 °C und höchstens 90 °C und insbesondere von 75 bis 85 °C aufweist. Prinzipiell ist die erfindungsgemäße Adsorptionsmaschine beziehungsweise das erfindungsgemäße Verfahren jedoch für beliebige Temperaturdifferenzen und Temperaturniveaus geeignet.

In einer alternativen Ausgestaltung der Erfindung kann eine erfindungsgemäße Adsorptionsmaschine drei Wärmeträgerkreise aufweisen, wobei der Hochtemperaturkreis zu einem zweiten Mitteltemperaturkreis eine Temperaturdifferenz ΔT_{X} und zu einem dritten Niedertemperaturkreis eine Temperaturdifferenz ΔT_{Y} aufweist, und wobei die Temperaturdifferenz ΔT_{Y} größer ist als die Temperaturdifferenz ΔT_{X}.

Mit der erfindungsgemäßen Adsorptionsmaschine wird jede Adsorbereinheit nicht wie üblich mit einem Wärmeträgerkreis fest verbunden oder diesem zugeordnet, sondern abhängig von seiner Temperatur im Rücklauf einem Wärmeträgerkreis zugeordnet. Dies wird insbesondere dadurch erreicht, dass die Ventile im Vor- und Rücklauf eines Bauteils in einer Steuerphase nicht beide in die gleiche Richtung (insbesondere zu demselben Wärmeträgerkreis) gestellt werden, sondern die Stellung von den anliegenden Temperaturniveaus abhängig gemacht wird. In einer erfindungsgemäßen Adsorptionsmaschine können die Ventile im vorlauf der beiden Adsorbereinheiten zu Beginn der Wärmerückgewinnungsphase so gestellt werden, dass der "neue" Desorber den Wärmeträger von dem Hochtemperaturkreis bekommt und somit aufgeheizt wird. Der noch kalte Rücklauf dieses "neuen" Desorbers jedoch wird weiterhin zum Mitteltemperaturkreis geleitet, bis das Temperaturniveau deutlich ansteigt, insbesondere um ein vorgegebenes Ausmaß oder auf eine Temperatur gleich oder oberhalb des Rücklaufs des "alten" Desorbers, welcher der "neue" Adsorber ist.. Analog dazu wird der Vorlauf des "neuen" Adsorbers mit dem Mitteltemperaturkreis verschaltet, so dass dieser "neue" Adsorber gekühlt wird. Der noch heiße Rücklauf des "neuen Adsorbers" wird jedoch weiterhin mit dem Hochtemperaturkreis verschaltet, bis das Temperaturniveau deutlich absinkt, insbesondere um ein vorgegebenes Ausmaß oder auf eine Temperatur gleich oder unterhalb des Rücklaufs des "alten" Adsorbers, welcher der "neue" Desorber ist..

Die Figur 1 zeigt ein Hydraulikschema eines Ausführungsbeispiels einer erfindungsgemäßen Adsorptionsmaschine.

Wie man in der Figur 1 erkennt, sind die Ventile der Vorlaufgruppe **(.._VL_..)** während der Wärmerückgewinnung anders geschaltet als die der Rücklaufgruppe (.._RL_..). Ein Vorteil dieser Adsorptionsmaschine besteht darin, dass eine Wärmerückgewinnung ohne Unterbrechung der externen Volumenströme erfolgen kann.

Damit ist während der Wärmerückgewinnung, zu jeder Zeit der Wärmeträger mit der höchsten im Rücklauf des Systems verfügbaren Temperatur in den Hochtemperaturkreis geleitet. Hierdurch wird einerseits die Energie minimiert, die von außen in das System eingebracht werden muss, und andererseits wird durch die Ausführung der Adsorptionsmaschine ebenfalls gewährleistet, dass zu jeder Zeit der Wärmeträger mit der niedrigsten Temperatur in den Kühlkreislauf eingeleitet wird, so dass möglichst wenig Energie rückgekühlt werden muss. Insbesondere, wenn gemäß einer Ausführung der Erfindung Pumpen, wie sie in der Beschreibungseinleitung mit Hinblick auf die bekannten Steuerungskonzepte beschrieben sind, eingespart werden, wird der elektrische Energiebedarf reduziert.

Insbesondere umfasst eine erfindungsgemäße Adsorptionsmaschine zwei Adsorbereinheiten. Diese Adsorptiosmaschinen können insbesondere Kälte in einem zweistufigen, zyklischen Prozess erzeugen. Um einen kontinuierlichen Kältestrom zu erzeugen, werden mindestens zwei Adsorbereinheiten gegeneinander verschaltet, so dass eine Adsorbereinheit gerade getrocknet wird, während die andere Kälte erzeugt. Grundsätzlich läuft dieser Prozess umso wirkungsvoller ab, je stärker vorher das Sorptionsmaterial getrocknet wurde - was wiederum mit höheren Antriebstemperaturen am besten gelingt.

Demnach ist auch eine Adsorptionskältemaschine Gegenstand der vorliegenden Erfindung. Diese Adsorptionskältemaschine umfasst mindestens zwei Adsorbereinheiten, einen Wärmeträger, mindestens zwei Wärmeträgerkreise mit einer Temperaturdifferenz ΔTₓ und eine Steuereinheit, wobei jede Adsorbereinheit in einer ersten Desorptionsphase als Desorber und in einer zweiten Adsorptionsphase als Adsorber arbeitet, und wobei der Wärmeträger in einem Rücklauf vom Desorber eine niedrigere Temperatur aufweist als im Vorlauf zum Desorber und wobei der Wärmeträger in einem Rücklauf vom Adsorber eine höhere Temperatur aufweist als in einem Vorlauf zum Adsorber, und wobei der Wärmeträger mit der höchsten Temperatur im Rücklauf von der ersten oder jeden weiteren Adsorbereinheit mit dem Hochtemperaturkreis verbunden ist.

Neben der Adsorptionsmaschine selbst ist auch ein Verfahren zur Wärmerückgewinnung in einer Adsorptionsmaschine gemäß Anspruch 12 Gegenstand der vorliegenden Erfindung. In besonders bevorzugter Weise werden dabei die Temperaturen der Rückläufe miteinander verglichen und der Rücklauf mit der höchsten Temperatur dem Hochtemperaturkreis zugeordnet.

Der Arbeitsablauf einer erfindungsgemäßen Adsorptionsmaschine kann wie folgt ablaufen. Zuerst werden Mineralien mit großer innerer Oberfläche, insbesondere Zeolithe oder Silikagele, durch Wärmezufuhr während einer Desorptionsphase getrocknet. Ist das Material ausreichend getrocknet, wird die Wärmezufuhr gestoppt und ein Ventil zu einem Wasserbehälter geöffnet. Aufgrund der enormen inneren Oberfläche und der besonderen Kristallstruktur kommt es zu einem sehr starken Ansaugen von Wasserdampf beziehungsweise dem Verdunsten von Wasser in dem zweiten Behälter. Wie bei jedem Verdunstungsvorgang kommt es nun im Wasser zu einem starken Temperaturabfall, je nach Betriebszustand bis zur Vereisung.

Um einen kontinuierlichen Kältestrom zu erzeugen, werden zwei solcher Anlagen gegeneinander verschaltet, so dass eine Adsorbereinheit gerade getrocknet wird, während die andere Kälte erzeugt. Alternativ kann die vorliegende Adsorptionsmaschine drei Adsorbereinheiten oder mindestens drei Adsorbereinheiten umfassen. Insbesondere ist dabei vorgesehen, dass eine Adsorptionsmaschine höchstens fünf Adsorbereinheiten umfasst. Prinzipiell kann Adsorptionsmaschine höchstens fünf Adsorbereinheiten umfasst. Prinzipiell kann jedoch die Leistung der Adsorbermaschine durch einfaches Hinzufügen von weiteren Adsorbereinheiten kontinuierlich erweitert werden.

Mit einer Adsorptionsmaschine gemäß der vorliegenden Erfindung kann insbesondere durch eine Reduzierung der notwendigen Pumpen der Strombedarf und auch die Lärmerzeugung deutlich reduziert werden. Zugleich wird der elektrische Wirkungsgrad verbessert. Beispielsweise kann die Adsorptionsmaschine ausschließlich in den externen Wärmeträgerkreisläufen, das heißt zwischen den Wärmequellen und/oder Wärmesenken und den Adsorbereinheiten Pumpen aufweisen, beispielsweise je externem Kreislauf eine einzige Pumpe, wie dies in der Figur 1 dargestellt ist. Die Adsorbereinheiten selbt können frei von Pumpen ausgeführt sein.

Als Wärmequelle kann beispielsweise Abwärme oder Überschusswärme aus bestehenden Systemen wie beispielsweise Blockheizkraftwerken, Solaranlagen oder Prozessabwärme genutzt werden.

## Patentansprüche

1. Adsorptionsmaschine, umfassend
mindestens eine erste und eine zweite Adsorbereinheit (1, 2), die jeweils an einem Vorlauf (VL) und einem Rücklauf (RL) angeschlossen sind, um Wärme aus einem durch den Vorlauf (VL) in die Adsorbereinheit (1, 2) geleiteten Wärmeträger der Adsorbereinheit (1, 2) zuzuführen oder aus der Adsorbereinheit (1, 2) auf den Wärmeträger abzuführen;
jede Adsorbereinheit (1, 2) arbeitet alternierend in einer Desorptionsphase als Desorber, wobei aus dem Wärmeträger Wärme auf den Desorber abgeführt wird, und einer Adsorptionsphase als Adsorber, wobei aus dem Adsorber Wärme auf den Wärmeträger abgeführt wird;
die Adsorptionsmaschine umfasst ferner wenigstens zwei Wärmeträgerkreisläufe, nämlich einen Heizkreislauf mit einer Wärmequelle (3) zum Aufheizen des Wärmeträgers, und einen Kühlkreislauf mit einer Wärmesenke (4) zum Abkühlen des Wärmeträgers; wobei
eine Steuereinheit vorgesehen ist, welche die Vorläufe (VL) und die Rückläufe (RL) individuell derart wechselnd in den Heizkreislauf und den Kühlkreislauf schaltet, dass stets der Rücklauf (RL) mit der höchsten Temperatur seinen Wärmeträger in den Heizkreislauf speist;
**dadurch gekennzeichnet, dass** die Steuereinheit derart ausgeführt ist, dass sie beim Übergang der ersten Adsorbereinheit (1) aus der Desorptionsphase in die Adsorptionsphase und der zweiten Adsorbereinheit (2) aus der Adsorptionsphase in die Desorptionsphase oder umgekehrt zunächst den Vorlauf (VL) der Adsorbereinheit (1, 2), welche als neuer Desorber geschaltet wird, mit dem Heizkreislauf verschaltet, so dass der neue Desorber aus dem Heizkreislauf gespeist und somit aufgeheizt wird, und der Rücklauf (RL) dieses neuen Desorbers weiterhin mit dem Kühlkreislauf verschaltet wird, bis das Temperaturniveau des Wärmeträgers im Rücklauf (RL) um ein vorgegebenes Ausmaß angestiegen ist, oder wärmer als der Rücklauf (RL) der anderen Adsorbereinheit (1, 2) ist, und der Vorlauf (VL) des neuen Adsorbers (1, 2) mit dem Kühlkreislauf verschaltet wird, so dass dieser neue Adsorber (1, 2) gekühlt wird, und der noch warme Rücklauf (RL) des neuen Adsorbers weiterhin mit dem Heizkreislauf verschaltet bleibt, bis die Temperatur des Wärmeträgers im Rücklauf (RL) um ein vorbestimmtes Ausmaß abgesunken ist, oder bis auf oder unter die Temperatur des Rücklaufes (RL) der anderen Adsorbereinheit (1, 2).

2. Adsorptionsmaschine gemäß Anspruch 1, **dadurch gekennzeichnet, dass** die Steuereinheit derart ausgeführt ist, dass sie stets den Rücklauf (RL) mit der niedrigsten Temperatur derart schaltet, dass er seinen Wärmeträger in den Kühlkreislauf speist.

3. Adsorptionsmaschine nach einem der Ansprüche 1 oder 2, **dadurch gekennzeichnet, dass** eine Temperaturdifferenz ΔT_{X} zwischen dem Heizkreislauf und dem Kühlkreislauf mindestens 10 °C oder mindestens 20 °C oder mindestens 25 °C beträgt.

4. Adsorptionsmaschine nach einem der Ansprüche 1 bis 3, **dadurch gekennzeichnet, dass** die Adsorptionsmaschine drei Wärmeträgerkreise umfasst.

5. Adsorptionsmaschine nach Anspruch 4, **dadurch gekennzeichnet, dass** der dritte Wärmeträgerkreis ein Niedertemperaturkreis ist und zum Heizkreislauf eine Temperaturdifferenz ΔT_{Y} aufweist, wobei die Temperaturdifferenz ΔT_{Y} größer ist als die Temperaturdifferenz ΔT_{X}.

6. Adsorptionsmaschine nach mindestens einem der vorgenannten Ansprüche, **dadurch gekennzeichnet, dass** der Wärmeträger mit der niedrigsten Temperatur dem Niedertemperaturkreis zu geordnet ist.

7. Adsorptionsmaschine nach mindestens einem der vorgenannten Ansprüche, **dadurch gekennzeichnet, dass** die Adsorptionsmaschine mindestens drei Adsorbereinheiten (1, 2) umfasst.

8. Adsorptionsmaschine nach mindestens einem der vorgenannten Ansprüche, **dadurch gekennzeichnet, dass** als Wärmeträger Wasser, Wasserdampf oder Öl eingesetzt wird.

9. Adsorptionsmaschine nach mindestens einem der vorgenannten Ansprüche, **dadurch gekennzeichnet, dass** jede Adsorbereinheit (1, 2) als Adsorptionsmittel Zeolithe umfasst.

10. Adsorptionsmaschine nach mindestens einem der vorgenannten Ansprüche, **dadurch gekennzeichnet, dass** die Adsorptionsmaschine eine Kältemaschine ist.

11. Verfahren zur Wärmerückgewinnung in einer Adsorptionsmaschine, umfassend mindestens eine erste und eine zweite Adsorbereinheit (1, 2), die jeweils an einem Vorlauf (VL) und einem Rücklauf (RL) angeschlossen sind, um Wärme aus einem durch den Vorlauf (VL) in die Adsorbereinheit (1, 2) geleiteten Wärmeträger der Adsorbereinheit (1, 2) zuzuführen oder aus der Adsorbereinheit (1, 2) auf den Wärmeträger abzuführen, und ferner umfassend wenigstens zwei Wärmeträgerkreisläufe, nämlich einen Heizkreislauf mit einer Wärmequelle (3) zum Aufheizen des Wärmeträgers, und einen Kühlkreislauf mit einer Wärmesenke (4) zum Abkühlen des Wärmeträgers, wobei
jede Adsorbereinheit (1, 2) alternierend in einer Desorptionsphase als Desorber arbeitet, wobei aus dem Wärmeträger Wärme auf den Desorber abgeführt wird, und in einer Adsorptionsphase als Adsorber, wobei aus dem Adsorber Wärme auf den Wärmeträger abgeführt wird; und
die Vorläufe (VL) und die Rückläufe (RL) individuell derart wechselnd in den Heizkreislauf und den Kühlkreislauf geschaltet werden, dass stets der Rücklauf (RL) mit der höchsten Temperatur seinen Wärmeträger in den Heizkreislauf speist ;
**dadurch gekennzeichnet, dass** beim Übergang der ersten Adsorbereinheit (1) aus der Desorptionsphase in die Adsorptionsphase und der zweiten Adsorbereinheit (2) aus der Adsorptionsphase in die Desorptionsphase oder umgekehrt zunächst der Vorlauf (VL) der Adsorbereinheit (1, 2), welche als neuer Desorber geschaltet wird, mit dem Heizkreislauf verschaltet wird, so dass der neue Desorber aus dem Heizkreislauf gespeist und somit aufgeheizt wird, und der Rücklauf (RL) dieses neuen Desorbers weiterhin mit dem Kühlkreislauf verschaltet wird, bis das Temperaturniveau des Wärmeträgers im Rücklauf (RL) um ein vorgegebenes Ausmaß angestiegen ist, oder wärmer als der Rücklauf (RL) der anderen Adsorbereinheit (1, 2) ist, und der Vorlauf (VL) des neuen Adsorbers (1, 2) mit dem Kühlkreislauf verschaltet wird, so dass dieser neue Adsorber (1, 2) gekühlt wird, und der noch warme Rücklauf (RL) des neuen Adsorbers weiterhin mit dem Heizkreislauf verschaltet bleibt, bis die Temperatur des Wärmeträgers im Rücklauf (RL) um ein vorbestimmtes Ausmaß abgesunken ist, oder bis auf die oder unter die Temperatur des Rücklaufes der anderen Adsorbereinheit (1, 2) abgesunken ist.

12. Verfahren gemäß Anspruch 11, **dadurch gekennzeichnet, dass** der Rücklauf (RL) mit der niedrigsten Temperatur stets derart geschaltet wird, dass er seinen Wärmeträger in den Kühlkreislauf speist.

13. Verfahren gemäß einem der Ansprüche 11 oder 12, **dadurch gekennzeichnet, dass** die Umschaltung der Vorläufe (VL) und der Rückläufe (RL) mittels einer Steuereinheit erfolgt, welche die Temperaturen der Rückläufe (RL) miteinander vergleicht.

## Claims

1. An adsorption machine, comprising at least one first and second adsorber unit (1, 2) which are each connected to a flow line (VL) and a return line (RL) in order to supply heat from a heat carrier to the adsorber unit (1, 2) guided through the flow line (VL) into the adsorber unit (1, 2) or from the adsorber unit (1, 2) to the heat carrier, each adsorber unit (1, 2) working in an alternating fashion in a desorption phase as a desorber, with heat being dissipated from the heat carrier to the desorber, and an adsorption phase as an adsorber, with heat being dissipated from the adsorber to the heat carrier, the adsorption machine further comprising at least two heat carrier circuits, which are a heating circuit with a heat source (3) for heating the heat carrier, and a cooling circuit with a heat sink (4) for cooling the heat carrier, with a control unit being provided which switches the flow lines (VL) and the return lines (RL) individually in an alternating manner to the heating circuit and the cooling circuit in such a way that the return line (RL) with the highest temperature always supplies its heat carrier to the heating circuit, **characterized in that** the control unit is arranged in such a way during the transfer of the first adsorber unit (1) from the desorption phase to the adsorption phase and the second adsorber unit (2) from the adsorption phase to the desorption phase or vice-versa it at first switches the flow line (VL) of the adsorber unit (1, 2) which is switched as a new desorber with the heating circuit, so that the new desorber is supplied from the heating circuit and is thus heated, and the return line (RL) of this new desorber is continued to be switched with the cooling circuit until the temperature level of the heat carrier in the return line (RL) has risen by a predetermined quantity, or is warmer than the return line (RL) of the other adsorber unit (1, 2), and the flow line (VL) of the new adsorber (1, 2) is switched with the cooling circuit so that said new adsorber (1, 2) is cooled, and the still warm return line (RL) of the new adsorber remains switched with the heating circuit until the temperature of the heat carrier in the return line (RL) has decreased by a predetermined quantity or up to or beneath the temperature of the return line (RL) of the other adsorber unit (1, 2).

2. An adsorption machine according to claim 1, **characterized in that** the control unit is arranged in such a way that it always switches the return line (RL) with the lowest temperature in such a way that its feeds its heat carrier to the cooling circuit.

3. An adsorption machine according to one of the claims 1 or 2, **characterized in that** a temperature difference ΔT_{X} between the heating circuit and the cooling circuit is at least 10°C or at least 20°C or at least 25°C.

4. An adsorption machine according to one of the claims 1 to 3, **characterized in that** the adsorption machine comprises three heat carrier circuits.

5. An adsorption machine according to claim 4, **characterized in that** the third heat carrier circuit is a low-temperature circuit and has a temperature difference ΔT_{Y} to the heating circuit, with the temperature difference ΔTγ being larger than the temperature difference ΔTₓ.

6. An adsorption machine according to at least one of the preceding claims, **characterized in that** the heat carrier with the lowest temperature is associated with the low-temperature circuit.

7. An adsorption machine according to at least one of the preceding claims, **characterized in that** the adsorption machine comprises at least three adsorber units (1, 2).

8. An adsorption machine according to at least one of the preceding claims, **characterized in that** water, steam or oil is used as a heat carrier.

9. An adsorption machine according to at least one of the preceding claims, **characterized in that** each adsorber unit (1, 2) comprises zeolites as an adsorption agent.

10. An adsorption machine according to at least one of the preceding claims, **characterized in that** the adsorption machine is a refrigerating machine.

11. A method for heat recovery in an adsorption machine, comprising at least one first and second adsorber unit (1, 2) which are each connected to a flow line (VL) and a return line (RL) in order to supply heat to the adsorber unit (1, 2) from a heat carrier guided through the flow line (VL) to the adsorber unit (1, 2) or from the adsorber unit (1, 2) to the heat carrier, and further comprising at least two heat carrier circuits, which is a heat circuit with a heat source (3) for heating the heat carrier, and a cooling circuit with a heat sink (4) for cooling the heat carrier, with each adsorber unit (1, 2) working in an alternating fashion in a desorption phase as a desorber, with heat being dissipated from the heat carrier to the desorber, and in an adsorption phase as an adsorber, with heat being dissipated to the heat carrier from the adsorber, and the flow lines (VL) and the return lines (RL) are switched in an individually changing manner to the heat circuit and the cooling circuit that always the return line (RL) with the highest temperature supplies its heat carrier to the heating circuit, during the transfer of the first adsorber unit (1) from the desorption phase to the adsorption phase and the second adsorber unit (2) from the adsorption phase to the desorption phase or vice-versa the flow line (VL) of the adsorber unit (1, 2) which is switched as a new desorber with the heating circuit is switched at first with the heating circuit, so that the new desorber is supplied from the heating circuit and is thus heated, and the return line (RL) of this new desorber is continued to be switched with the cooling circuit until the temperature level of the heat carrier in the return line (RL) has risen by a predetermined quantity, or is warmer than the return line (RL) of the other adsorber unit (1, 2), and the flow line (VL) of the new adsorber (1, 2) is switched with the cooling circuit so that said new adsorber (1, 2) is cooled, and the still warm return line (RL) of the new adsorber remains switched with the heating circuit until the temperature of the heat carrier in the return line (RL) has decreased by a predetermined quantity, or has decreased down to or beneath the temperature of the return line (RL) of the other adsorber unit (1, 2).

12. A method according to claim 11, **characterized in that** the return line (RL) with the lowest temperature is always switched in such a way that it supplies its heat carrier to the cooling circuit.

13. A method according to one of the claims 11 or 12, **characterized in that** the changeover between the flow lines (VL) and the return lines (RL) occurs by means of a control unit which compares the temperatures of the return lines (RL) with each other.

## Revendications

1. Machine à adsorption, comprenant
au moins une première et une seconde unité d'adsorption (1,2), chacune étant branchée à une avance (VL) et un retour (RL) pour transférer de la chaleur à partir d'un fluide caloporteur conduit à travers l'avance (VL) dans l'unité d'adsorption (1, 2) ou bien à partir de l'unité d'adsorption (1, 2) vers le fluide caloporteur ;
chaque unité d'adsorption (1, 2) travaille alternativement en une phase de désorption comme désorbeur, la chaleur du fluide caloporteur étant transférée sur le désorbeur, et en une phase d'absorption comme absorbeur, la chaleur étant transférée de l'absorbeur vers le du fluide caloporteur ;
la machine à adsorption comprend de plus au moins deux circuits de fluide caloporteur, à savoir un circuit chauffant avec une source de chaleur (3) pour chauffer le fluide caloporteurs, et un circuit de refroidissement avec une source de froid (4) pour refroidir le fluide caloporteurs ;
une unité de commande étant prévue, ladite commande branchant continuellement les avances (VL) et les retours (RL) séparément alternativement vers le circuit chauffant et le circuit de refroidissement de sorte que toujours le retour (RL) ayant la température la plus élevée déverse son fluide caloporteur dans circuit chauffant ;
**caractérisée en ce**ci que ladite unité de commande est réalisée de telle manière qu'elle branche, lors du passage de ladite première unité d'adsorption (1) de la phase de désorption à la phase d'absorption et de ladite seconde unité d'adsorption (2) de la phase d'absorption à la phase de désorption ou inversement, tout d'abord l'avance (VL) de ladite unité d'adsorption (1, 2), qui est commutée comme nouveau désorbeur, sur le circuit chauffant de manière à ce que le nouveau désorbeur soit alimenté par le circuit chauffant et donc chauffé, et le retour (RL) de ce nouveau désorbeur continue à être branché sur le circuit de refroidissement jusqu'à ce que le niveau de température du fluide caloporteur dans le retour (RL) ait augmenté dans une mesure déterminée, ou bien soit plus chaud que le retour (RL) de l'autre unité d'adsorption (1, 2), et que l'avance (VL) du nouvel absorbeur (1,2) est branchée sur le circuit de refroidissement de manière à ce que ce nouvel absorbeur (1,2) soit refroidi, et que le retour (RL) du nouvel absorbeur encore chaud continue à être branché sur le circuit chauffant jusqu'à ce que la température du fluide caloporteur dans le retour (RL) ait diminué dans une mesure déterminée, ou bien ait atteint ou soit inférieure à la température du retour (RL) de l'autre unité d'adsorption (1,2).

2. Machine à adsorption selon la revendication 1, **caractérisée en ce**ci que ladite unité de commande est réalisée de telle manière qu'elle commute toujours le retour (RL) à la température la plus basse de manière à ce qu'il déverse son fluide caloporteur dans le circuit de refroidissement;

3. Machine à adsorption selon une des revendications 1 ou 2, **caractérisée en ce**ci qu'une différence de température ΔTₓ entre ledit circuit chauffant et ledit circuit de refroidissement soit d'au moins 10° C ou au moins 20° C ou au moins 25° C.

4. Machine à adsorption selon une des revendications 1 à 3, **caractérisée en ce**ci que la machine à adsorption comporte trois circuits de fluide caloporteur.

5. Machine à adsorption selon la revendication 4, **caractérisée en ce**ci que le troisième circuit de fluide caloporteur est un circuit basse température et présente une différence de température ΔT_{y} par rapport au circuit chauffant, ladite différence de température ΔT_{y} étant plus grande que la différence de température ΔTₓ.

6. Machine à adsorption selon au moins une des revendications précédentes,
**caractérisée en ce**ci que le fluide caloporteur ayant la température la plus basse est attribué audit circuit basse température.

7. Machine à adsorption selon au moins une des revendications précédentes,
**caractérisée en ce**ci que la machine à adsorption comprend au moins trois unités d'adsorption (1, 2).

8. Machine à adsorption selon au moins une des revendications précédentes,
**caractérisée en ce**ci que comme fluide caloporteur on utilise de l'eau, de la vapeur d'eau ou de l'huile.

9. Machine à adsorption selon au moins une des revendications précédentes,
**caractérisée en ce**ci que chaque unité d'adsorption (1, 2) comporte une zéolithe comme adsorbant.

10. Machine à adsorption selon au moins une des revendications précédentes,
**caractérisée en ce**ci que la machine à adsorption est une machine frigorifique.

11. Procédé de récupération de chaleur dans une machine à adsorption, comprenant au moins une première et une seconde unité d'adsorption (1, 2), branchée chacune sur une avance (VL) et un retour (RL) pour transférer de la chaleur à partir d'un fluide caloporteur conduit par l'avance (VL) de l'unité d'adsorption (1, 2) vers l'unité d'adsorption (1, 2) ou à partir de l'unité d'adsorption (1, 2) vers le fluide caloporteur, et comprenant de plus au moins deux circuits de fluide caloporteur, à savoir un circuit chauffant avec une source de chaleur (3) pour chauffer le fluide caloporteurs et un circuit de refroidissement avec une source de froid (4) pour refroidir le fluide caloporteur,
chaque unité d'adsorption (1, 2) travaillant alternativement en une phase de désorption comme désorbeur, la chaleur provenant du fluide caloporteur étant transférée sur le désorbeur, et en une phase d'absorption comme absorbeur, la chaleur provenant de l'absorbeur étant transférée vers le fluide caloporteurs et
les avances (VL) et les retours (RL) étant séparément alternativement branchés sur le circuit chauffant et circuit de refroidissement de sorte que le retour (RL) ayant la plus haute température déverse toujours température le fluide caloporteur dans le circuit chauffant ;
**caractérisé en ce**ci que, lors du passage de la première unité d'adsorption (1) de la phase de désorption à la phase d'absorption et de la seconde unité d'adsorption (2) de la phase d'absorption à la phase de désorption ou inversement, tout d'abord l'avance (VL) de ladite unité d'adsorption (1, 2), qui est commutée comme nouveau désorbeur, est branchée sur circuit chauffant de manière à ce que le nouveau désorbeur soit alimenté par ledit circuit chauffant et donc chauffé, et le retour (RL) de ce nouveau désorbeur continue à être branché sur le circuit de refroidissement jusqu'à ce que le niveau de température du fluide caloporteur dans le retour (RL) ait augmenté dans une mesure déterminée, ou bien soit plus chaud que le retour (RL) de l'autre unité d'adsorption (1, 2), et que l'avance (VL) du nouvel absorbeur (1,2) est branchée sur le circuit de refroidissement de manière à ce que ce nouvel absorbeur (1,2) soit refroidi, et que le retour (RL) du nouvel absorbeur encore chaud continue à être branché sur le circuit chauffant jusqu'à ce que la température du fluide caloporteur dans le retour (RL) ait diminué dans une mesure déterminée, ou bien ait atteint ou est inférieure à la température dus retour de l'autre unité d'adsorption (1,2).

12. Procédé selon la revendication 11, **caractérisé en ce**ci que le retour (RL) ayant la température la plus basse est toujours commuté de telle manière que son fluide caloporteur se déverse dans le circuit de refroidissement.

13. Procédé selon une des revendications 11 ou 12, **caractérisée en ce**ci que la commutation des avances (VL) et des retours (RL) est effectuée par une unité de commande, qui compare entre-elles les températures dans les retours (RL).
